(19) Europäisches Patentamt

**European Patent Office**

**Office européen des brevets**

(11) Numéro de publication: **0 273 212 B1**

(12) **FASCICULE DE BREVET EUROPEEN**

(45) Date de publication de fascicule du brevet: **29.04.92**  (51) Int. Cl.⁵: **H01M 4/26**

(21) Numéro de dépôt: **87117672.3**

(22) Date de dépôt: **30.11.87**

(54) **Procédé de fabrication d'électrodes plastifiées pour accumulateurs.**

(30) Priorité: **04.12.86 FR 8616984**

(43) Date de publication de la demande:
**06.07.88 Bulletin 88/27**

(45) Mention de la délivrance du brevet:
**29.04.92 Bulletin 92/18**

(84) Etats contractants désignés:
**DE ES FR GB IT SE**

(56) Documents cités:
**EP-A- 0 077 030**
**EP-A- 0 185 830**
**WO-A-86/02494**

(73) Titulaire: **SAFT (inscrite au Registre du Commerce sous le numéro 343 588 737)**
**156 avenue de Metz**
**F-93230 Romainville(FR)**

(72) Inventeur: **Brezillon, Jean Loup**
**4 rue de la Gare**
**Parempuyre F-33290 Blanquefort(FR)**

(74) Mandataire: **Weinmiller, Jürgen et al**
**Lennéstrasse 9 Postfach 24**
**W-8133 Feldafing(DE)**

Rank Xerox (UK) Business Services
(-/2.18/2.0)

## Description

La présente invention concerne une procédé de fabrication d'électrodes plastifiées pour accumulateurs, notamment pour accumulateurs alcalins, et se rapporte plus particulièrement aux bords de ces électrodes.

On sait que, pour réaliser une telle électrode, on part d'un support métallique du genre feuillard perforé, sur les faces duquel sont appliquées par enduction ou calandrage des couches de pâte active. Cette pâte contient de la matière active ainsi qu'un polymère qui sert de liant plastique, dont la teneur est optimisée selon trois critères :

- La tenue mécanique de l'électrode qui augmente avec la teneur en liant.
- La conductivité électrique de las masse plastifiée qui diminue lorsque la teneur en liant augmente.
- L'aptitude au fonctionnement électrochimique qui est un critère plus complexe tenant compte d'un certain nombre de propriétés de la masse plastifiée : mouillabilité par l'électrolyte, stabilité et compatibilité chimique du liant avec la matière active et l'électroylte ; cette aptitude au fonctionnement électrochimique diminue elle aussi lorsque la teneur en liant augmente.

On est ainsi conduit à réaliser des électrodes ayant une tenue mécanique suffisante pour assurer le montage des accumulateurs et la stabilité des performances des électrodes.

Le procédé de fabrication comporte une phase de découpe à la dimension voulue du support enduit de masse active. Or on constate que l'électrode ainsi obtenue présente une faiblesse mécanique au niveau des zones de découpe et qu'au cours des manipulations ultérieures inhérentes au montage, il apparaît un effritement des bords. On observe également, plus tard, au cours du fonctionnement normal de l'accumulateur, des pertes de matière active autour des bords qui peuvent entraîner des courts-circuits et par conséquent la mise hors service de cet accumulateur.

La présente invention a pour but d'éviter cet inconvénient.

La présente invention a pour objet un procédé de fabrication d'électrodes plastifiées pour accumulateur dans lequel on recouvre les faces d'un support métallique perforé d'une couche de pâte contenant de la matière électrochimiquement active et un liant plastique, on sèche et on découpe le support à la dimension voulue pour une électrode, caractérisé par le fait que l'on enduit les bords de l'électrode au niveau des zones de découpe d'une polyoléfine fondue, ladite polyoléfine étant choisie pour sa grande inertie chimique vis-à-vis de l'électrolyte et des matières actives devant se trouver dans ledit accumulateur, et pour sa température de fusion qui doit être supérieure à la température normale d'utilisation des accumulateurs.

De préférence, ladite polyoléfine fondue se trouve, au moment de son application sur lesdits bords, à une température supérieure d'au moins 60°C à sa température de solidification.

La parafine convient très bien pour les accumulateurs alcalins.

La présente invention a également pour objet un dispositif pour la mise en oeuvre du procédé précédent, caractérisé par le fait qu'il comporte au moins deux rouleaux identiques disposés l'un au dessous de l'autre et tournant en synchronisme, portant chacun sur les bords d'une face une rainure, les rainures des deux rouleaux étant situées en regard l''une de l'autre et coopérant entre elles de manière à loger un bord d'électrode à traiter, l'un des rouleaux étant partiellement immergé dans un bain de polyoléfine fondue.

La présente invention a également pour objet une électrode plastifiée pour accumulateur alcalin comportant un feuillard métallique perforé recouvert sur ses deux faces de masse électrochimiquement active plastifiée, caractérisée par le fait qu'au moins un de ses bords est enduit d'une polyoléfine sur une largeur de 1 à 2 mm qui a pénétré dans ladite masse active.

D'autres caractéristiques et avantages de la présente invention apparaîtront au cours de la description suivante d'un mode de mise en oeuvre.

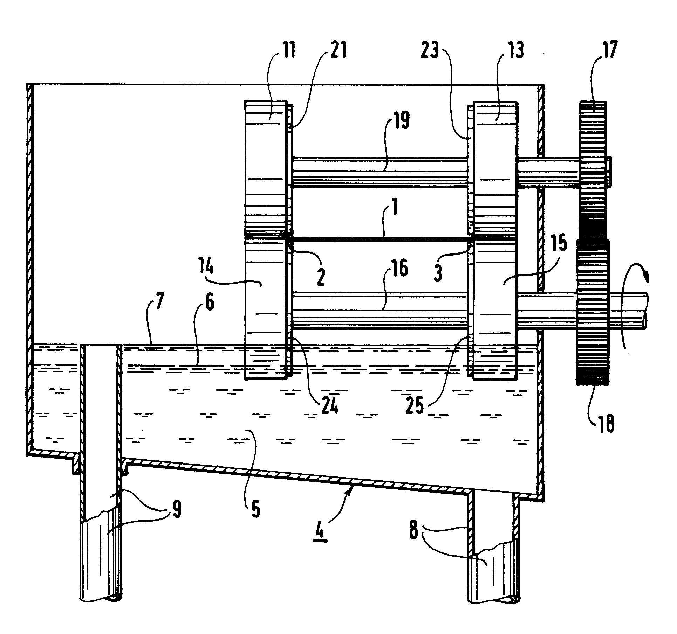

La figure unique annexée montre très schématiquement en élévation partiellement coupée une machine permettant de renforcer les bords d'une électrode par la mise en oeuvre du procédé selon l'invention. Une électrode 1 est montrée en coupe transversale avec ses bords référencés 2 et 3. Elle est parfaitement sèche et découpée au format prévu pour le montage ultérieur en accumulateur. Un bac 4 contient de la parafine fondue 5 ; les niveaux inférieur et supérieur de la parafine 5 dans le bac 4 sont référencés 6 et 7 ; il comporte une arrivée 8 de parafine 5 et un trop plein 9. La température de cette polyoléfine est supérieure de 60°C à 80°C à sa tempéerature de fusion; L'installation comporte deux rouleaux supérieurs 11 et 13 d'axe 19 et deux rouleaux inférieurs 14 et 15 d'axe 16, entraînés en rotation en synchronisme par l'intermédiaire des engrenages 17 et 18.

Les rouleaux 11, 14, 13, 15 sont munis respectivement sur une face de rainures 21, 24, 23, 25. Elles sont écartées et disposées de façon telle qu'elles constituent un logement pour une portion des bords 2 et 3 de l'électrode 1 à traiter.

Grâce à la rotation des rouleaux dont deux (les rouleaux 14 et 15) plongent dans la parafine, le bordage s'effectue simultanément sur les deux bords 2 et 3 à la vitesse de 8 à 15 cm/seconde. A titre d'exemple, la largeur et la profondeur des rainures est de 2 mm.

La diffusion de la parafine s'effectue très rapidement dans toute l'épasisseur de l'électrode avant solidification. Comme l'électrode entre dans la machine à la température ambiante, cette solidification intervient très rapidement (2 à 4 secondes) après l'application du produit. Dès cet instant, l'électrode est manipulable et peut être empilée sans précautions particulières dans les chargeurs utilisés pour le transport vers le poste de montage des accumulateurs. Les électrodes étant entraînées avant et après l'opération de bordage par des tapis roulants animés d'une vitesse de 8 à 15 centimètres par seconde, la rapidité de mise en oeuvre du procédé est particulièrement avantageuse car elle permet de limiter l'encombrement total de la machine.

La surface affectée par le bordage est parfaitement définie par la géométrie des rouleaux applicateurs. Selon la largeur des plaques la surface bordée représente de 2,5 % à 5 % de la surface active totale des électrodes. La quantité de produit de bordage utilisé reste faible 0,3 % à 1 % de la masse des électrodes ; cependant la concentration locale dans la zone bordée peut atteindre 15 % à 20 % en poids par rapport à la matière active, ce qui explique l'augmentation considérable de la cohésion de la matière active dans cette zone. Des mesures de force de cisaillement de la matière active au niveau de feuillard effectuées sur des échantillons d'électrodes consilidées par polymère donnent les résultats suivants :
Electrode de l'art antérieur : 2,7 daN/cm2
Electrode selon l'invention : 4,05 daN/cm2.

Du fait de cette augmentation de la cohésion du bord des électrodes, les pertes de matière par pelage ou écaillage au bord des plaques sont totalement éliminées.

Les prinicpaux avantages du procédé sont sa facilité et sa rapidité de mise en oeuvre ; la précision avec laquelle la polyoléfine est déposée autorise une concentration locale importante en produit de consolidation. Le renforcement de la tenue mécanique ainsi obtenue sur le bord des électrodes permet d'abaisser le taux de liant utilisé dans la préparation de la masse active plastifiée et donc d'atteindre un meilleur compromis solidité-performances des électrodes ainsi fabriqueés.

Selon une variante de mise en oeuvre on peut mélanger la parafine avec un polymère d'éthylène dans une proportion inférieure à 30 % en poids, par exemple comprise entre 10 % et 30 %. Il peut s'agir du produit de type MK 2000 commercialisé par la société "Charbonages de France" CHIMIE ; sa densité est de 0,91. Son indice de fluidité IF est de 200 grammes pour 10 minutes ; son intervalle de fusion est de 100 à 104 °C.

Bien entendu l'invention n'est pas limitée aux modes de réalisation précités. On pourra, sans sortir du cadre de l'invention remplacer tout moyen par un moyen équivalent.

## Revendications

1. Procédé de fabrication d'électrodes plastifiées pour accumulateur dans lequel on recouvre les faces d'un support métallique perforé d'une couche de pâte contenant de la matière électrochimiquement active et un liant plastique, on sèche et on découpe le support à la dimension voulue pour une électrode, caractérisé par le fait que l'on enduit les bords (2, 3) de l'électrode (1) au niveau des zones de découpe d'une polyoléfine fondue (5), ladite polyoléfine étant choisie pour sa grande inertie chimique vis-à-vis de l'électrolyte et des matières actives devant se trouver dans ledit accumulateur, et pour sa température de fusion qui doit être supérieure à la température normale d'utilisation des accumulateurs.

2. Procécé selon la revendication 1, caractérisé par le fait que ladite polyoléfine fondue se trouve, au moment de son application sur lesdits bords, à une température supérieure d'au moins 60 °C à sa température de solidification.

3. Procédé selon l'une des revendications 1 et 2, caractérisé par le fait que ladite polyoléfine est de la parafine, seule ou en mélange avec un polymère d'éthylène dans une proportion inférieure à 30 % en poids.

4. Dispositif pour la mise en oeuvre du procédé selon l'une des revendications précédentes, caractérisé par le fait qu'il comporte au moins deux rouleaux identiques (15, 13) disposés l'un au-dessous de l'autre et tournant en synchronisme, portant chacun sur le bord d'une face une rainure (25, 23), les rainures des deux rouleaux étant situées en regard l'une de l'autre et coopérant entre elles de manière à loger un bord (3) d'électrode (1) à traiter, l'un des rouleaux étant partiellement immergé dans un bain de polyoléfine fondue (5).

5. Electrode plastifiée pour accumumlateur alcalin comportant un feuillard métallique perforé recouvert sur ses deux faces de masse électrochimiquement active plastifiée, caractérisée par le fait qu'au moins un de ses bords (2, 3) est enduit d'une polyoléfine sur une largeur de l à 2 mm qui a pénétré dans ladite masse active.

## Claims

1. A method of manufacturing plastified electrodes for a storage battery in which the faces of a perforated metal support are coated with a layer of paste containing an electrochemically active material and a plastic binder, followed by a drying stage, and then the support is cut to the size required for an electrode, characterized in that the edges (2, 3) of the electrode (1) along the lines of cut are impregnated with a polyolefin in the melted state (5), said polyolefin being selected for its high degree of chemical inertness relative to the electrolyte and to the active materials to be found in said storage battery, and for its melting temperature which must be higher than normal operating temperature of the storage battery.

2. A method according to claim 1, characterized in that said polyolefin in the melted state is, at the moment it is applied to said edges, at a temperature which is at least 60°C higher than its solidification temperature.

3. A method according to one of claims 1 or 2, characterized in that said polyolefin is paraffin, on its own or mixed with not more than 30% by weight of an ethylene polymer.

4. Apparatus for implementing the method according to any one of the preceding claims, characterized in that it comprises at least two identical rolls (15, 13) disposed one above the other and turning synchronously, each roll having a groove (25, 23) on the edge of one of its faces, with the grooves of the two rolls facing one another and co-operating in such a manner as to receive one of the edges (3) of the electrode (1) to be processed, with one of the rolls being partially immersed in a bath of polyolefin (5) in the melted state.

5. A plastified electrode for an alkaline storage battery, comprising a perforated metal sheet covered on both faces with a plastified electrochemically active mass, characterized in that at least one of its edges (2, 3) is impregnated with a polyolefin over a width of 1 to 2 mm, which polyolefin penetrates into said active mass.

## Patentansprüche

1. Verfahren zur Herstellung von plastifizierten Elektroden für Akkumulatoren, bei dem man die Flächen eines gelochten Metallträgers mit einer Schicht einer Paste bedeckt, die elektrochemisch aktives Material und ein plastisches Bindemittel enthält, man den Träger trocknet und in die für eine Elektrode gewünschte Größe ausschneidet, dadurch gekennzeichnet, daß man die Ränder (2, 3) der Elektrode (1) in Höhe der Schnittbereiche mit einem geschmolzenen Polyolefin (5) tränkt, wobei ein Polyolefin mit großer chemischer Trägheit gegenüber dem Elektrolyten und den aktiven Materialien, die sich in dem Akkumulator befinden sollen, und mit einer Schmelztemperatur ausgewählt wird, die höher sein muß als die normale Betriebstemperatur der Akkumulatoren.

2. Verfahren nach Anspruch 1, dadurch gekennzeichnet, daß dieses geschmolzene Polyolefin sich zum Zeitpunkt seines Anbringens auf diesen Rändern auf einer Temperatur befindet, die mindestens 60°C höher als ihre Verfestigungstemperatur liegt.

3. Verfahren nach einem der Ansprüche 1 und 2, dadurch gekennzeichnet, daß dieses Polyolefin Paraffin ist, allein oder in einer Mischung mit einem Äthylenpolymer, dessen Anteil weniger als 30 Gew.-% beträgt.

4. Vorrichtung zur Anwendung des Verfahrens nach einem der vorhergehenden Ansprüche, dadurch gekennzeichnet, daß sie mindestens zwei identische Rollen (15, 13) aufweist, die übereinander angeordnet sind und sich synchron drehen, die je auf dem Rand einer Fläche eine Nut (25, 23) aufweisen, wobei die Nuten der beiden Rollen einander gegenüberliegen und so zusammenwirken, daß sie einen Rand (3) einer zu behandelnden Elektrode (1) aufnehmen, wobei eine der Rollen teilweise in ein Bad aus geschmolzenem Polyolefin (5) getaucht ist.

5. Plastifizierte Elektrode für einen alkalischen Akkumulator, der eine gelochte Metallfolie aufweist, die auf ihren beiden Flächen mit elektrochemisch aktiver plastifizierter Masse bedeckt ist, dadurch gekennzeichnet, daß mindestens einer ihrer Ränder (2, 3) mit einem Polyolefin über eine Breite von 1 bis 2 mm eingelassen ist, das in diese aktive Masse eingedrungen ist.